# EUROPEAN PATENT SPECIFICATION

(11) **EP 4 212 411 B1**
(45) Date of publication and mention of the grant of the patent: **09.09.2026**
(21) Application number: 22151444.1
(22) Date of filing: 13.01.2022
(51) Int. Cl.: B62D 15/02, G05B 13/04

(54) **METHOD AND DEVICE FOR AUTOMATICALLY DRIVING AN AUTOMATED VEHICLE INTO A PARKING GARAGE**
VERFAHREN UND VORRICHTUNG ZUM AUTOMATISCHEN EINFAHREN EINES AUTOMATISIERTEN FAHRZEUGS IN EIN PARKHAUS
PROCÉDÉ ET DISPOSITIF DE CONDUITE AUTOMATIQUE D'UN VÉHICULE AUTOMATISÉ DANS UN GARAGE DE STATIONNEMENT

(43) Date of publication of application: 19.07.2023
(73) Proprietor: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(56) References cited:
- DE-A1- 102009 026 426
- DE-A1- 102018 104 185
- DE-A1- 102020 200 747
- KR-A- 20200 094 036

## Description

The present disclosure is directed to a method for automatically driving an automated vehicle into a parking garage, and a data processing unit configured to carry out the method at least partly. An, optionally automated, vehicle comprising the data processing unit may be provided. Additionally or alternatively, a computer program may be provided, wherein the computer program comprises instructions which, when the program is executed by a computer, e.g., the data processing unit, cause the computer to carry out the method at least partly. Additionally or alternatively, a computer-readable (storage) medium may be provided, wherein the computer-readable medium comprises instructions which, when executed by a computer, cause the computer to carry out the method at least partly.

It may be difficult for drivers of a vehicle, such as a car, to drive the vehicle comfortable towards a parking garage barrier gate and to press a button of a parking ticket machine installed in front of the barrier which will provide the parking ticket to enter the parking garage, i.e., the parking zone thereof. Often drivers need to do some steering maneuver corrections to come sufficiently near to the parking ticket machine and then press the button to obtain the ticket.

To solve this problem so-called automated valet parking was developed. Automated valet parking means that the parking garage is equipped with infrastructure such as sensor systems including cameras to detect the vehicle and to automatically open the barrier at the entrance of the parking garage so that the driver does not need to manually open the barrier by pushing a button at the ticket machine. The vehicle may drive into the parking garage fully automated.

One drawback thereof is that automated valet parking solely works at parking garages equipped with such an infrastructure.

Document DE 10 2018 104185 A1 shows the features of the preamble of claim 1 and discloses a vehicle control device, a vehicle control method, a program and a storage medium including the program, which solve the problem of stopping a vehicle at an appropriate position where a hand of a driver reaches a ticket vending machine or the like with the following means: a vehicle control apparatus comprising a stopping position determining unit which determines a stopping position of the vehicle at which the hand of the driver reaches the ticket vending machine or the like based on the position of the ticket vending machine or the like and based on position information with respect to a seat of the driver and a driving control unit which stops the vehicle at its determined stopping position.

Document KR 10-2020-0094036 A discloses an automated ticket issuing machine for moving towards the driver. A ticketing machine which can move towards a driver includes a housing having an open front surface and formed to accommodate various devices therein, a printer which is formed on the front surface of the housing and prints a ticket with set information and a drive unit formed under the printer to support the printer and allow the printer to protrude from the front surface toward the driver in a vehicle. This allows the driver to get a ticket without getting out of the vehicle.

Document DE 10 2009 026426 A1 discloses a method for positioning a vehicle with respect to e.g. a vending machine and a limit, which involves guiding the vehicle for positioning on trajectory by interference in on-board systems e.g. a steering element of the vehicle. The method involves determining a local position and dimensions of a terminal, e.g. a vending machine, and a limit by an on-board-bounded surrounding sensor. An optimal trajectory is determined from a relative position of a vehicle with respect to the terminal and the limit. The vehicle is guided for positioning on the trajectory by an interference in on-board systems e.g. a steering element, a brake and a drive train of the vehicle. Information about a place and a type of the terminal is transferred by a radio frequency identification connection.

In the light of this prior art, the object of the present disclosure is to provide a device and/or a method being suitable for overcoming at least the above-mentioned disadvantage of the prior art, respectively.

The object is solved by the features of the independent claim. The dependent claims have preferred further embodiments of the disclosure as their subject matter.

More specifically, the object is solved by a method for automatically driving an automated vehicle into a parking garage.

The method comprises detecting a ticket machine being installed at an access road of a parking garage using sensor data captured by an on-board sensor system of the vehicle.

That is, the method may include directly detecting the ticket machine and location thereof using sensor data, e.g., camera data, and an objection algorithm configured to detect the ticket machine. However, the method may also include, additionally or alternatively, to indirectly detect the ticket machine and the location thereof using information of the environment of the vehicle, such as a trajectory of a vehicle in front of the automated vehicle driving to the ticket machine.

The method further comprises maneuvering the vehicle to the detected ticket machine such that a distance between a window of the vehicle next to a driver seat of the vehicle and the detected ticket machine is below 80 cm.

That is, the lateral distance between the vehicle, preferably between the driver of the vehicle, and the ticket machine should be below a certain threshold, here 80 cm. Preferably the distance is below an arm length of the driver. The distance may be below/smaller than 75 cm, 70 cm, 65 cm, 60 cm, 55 cm, 50 cm, 45 cm, 40 cm, 30 cm, 25 cm or 20 cm. The distance may be measured substantially orthogonal to an interface of the ticket machine and a lateral outer surface of the vehicle, such as a window of the vehicle being positioned lateral to the driver seat of the vehicle.

The vehicle controls a longitudinal and/or lateral movement of the vehicle during maneuvering the vehicle to the detected ticket machine.

That is, depending on an automation level of the vehicle (described in detail below) the vehicle may take over control of the steering, breaking, and/or accelerating of the vehicle and may drive the vehicle towards the ticket machine, fully or partially automated.

In conclusion, a method is provided avoiding the need of driving a vehicle manually and thus probably uncomfortable towards a parking ticket machine installed in front of a barrier of a parking garage, wherein the method does not necessarily rely on external infrastructure, i.e., the parking garage does not have to be equipped with dedicated infrastructure.

The above method was described with respect to an access road for entering the parking garage. However, the method may also be used for leaving the parking garage. That is, provided is a method for automatically driving an automated vehicle out of a parking garage. The method comprises detecting a ticket machine being installed at an exit road of a parking garage using sensor data captured by an on-board sensor system of the vehicle, and maneuvering the vehicle to the detected ticket machine such that a distance between a window of the vehicle next to a driver seat of the vehicle and the detected ticket machine is below 80 cm. The vehicle controls a longitudinal and/or lateral movement of the vehicle during maneuvering the vehicle to the detected ticket machine.

The method may include paying the ticket automatically by connecting the vehicle to an external infrastructure, optionally of the parking garage, when leaving the parking garage.

The above given description of the method for entering the parking garage applies mutatis mutandis to the method for leaving/driving out of the parking garage. Both methods may be combined in any possible/advantageously manner.

In the following, preferred aspects of the above-described method(s) are outlined in detail.

The method may comprise detecting a location of the parking garage based on/using map data. That is, the map data, optionally already stored in the vehicle, may comprise information about locations of parking garages. This information may be used to detect the location of the parking garage at which the user/driver of the car optionally wants to park the vehicle.

The method may comprise displaying an information about the detected location of the parking garage to a user, receiving an user input in response to displaying the information about the detected location of the parking garage, and maneuvering the vehicle to the detected location of the parking garage depending on the received user input. The vehicle may control the longitudinal and/or lateral movement of the vehicle during maneuvering the vehicle to the detected location of the parking garage.

In other words, the method may for example comprise displaying several locations of parking garages with respect to the vehicle using predefined icons at a display unit of the vehicle together with the map data. The information may be displayed as a push notification. The user may select one of the parking garages, e.g., by pushing a predefined button, by pointing towards the desired parking garage icon and/or by using an optional touch screen of the display unit and touching the icon corresponding to the desired parking garage. The vehicle may then navigate, optionally fully or partially automated, to the parking garage chosen by the driver of the vehicle.

The vehicle may control the longitudinal and/or lateral movement of the vehicle during maneuvering the vehicle to the detected ticket machine based on the sensor data captured by the on-board sensor system of the vehicle.

Maneuvering the vehicle to the detected ticket machine may include/comprise determining if a further vehicle is located in front of the vehicle in the access and/or exit road of the parking garage, and following the further vehicle by controlling the longitudinal and/or lateral movement of the vehicle.

More specifically, when entering the access/exit road of the parking garage a vehicle in front of the automated vehicle may be positioned between a sensor of the vehicle used for detecting the ticket machine and the ticket machine. Thus, the ticket machine may not be detected based on the sensor data capture by said senso since the vehicle in front of the automated vehicle occludes the ticket machine. However, in such a case the automated vehicle may detect the vehicle in front of it and may consider it as a leading vehicle. The automated vehicle may, optionally initially, follow the leading vehicle in maneuvering towards the ticket machine until the ticket machine may be detected by its own on-board sensors.

The method may further comprise maneuvering the vehicle behind a barrier installed in front of the parking garage after reaching the ticket machine.

That is, according to the method the vehicle may stop automated/automatically lateral to the ticket machine and/or the driver may manually stop the vehicle laterally to the ticket machine. After the driver opened the barrier of the parking garage using the ticket machine, the vehicle may maneuver automated behind the (entrance/exit) barrier of the parking garage such that the driver does not have to manually maneuver through the narrow entrance part of the parking garage.

The above-described method may be summarized in other words and with respect to a more concrete implementation thereof as follows.

The Background of the disclosure is to create a new parking comfort function including detecting a parking garage barrier gate and automatically maneuver and control the vehicle in both longitudinal and lateral direction, i.e., both braking/acceleration and steering the vehicle automatically, in front of the parking barrier gate until the parking ticket satiation/machine is reached and optionally until the parking barrier is crossed. The disclosure may also provide a method, i.e., comprise a step, where the vehicle establishes a communication with an infrastructure of the parking garage to pay its parking ticket.

The system may use sensor information/data from a navigation system, on-board sensors such as a front camera, a side radar and/or a surround view camera system.

Before entering any parking garage, the navigation system may detect a location of the parking garage and may inform the vehicle that it is in proximity to the parking garage.

The navigation system may provide an automatic pop-up in a vehicle infotainment system that a parking garage is found and determine if the driver is willing to park in this parking garage. This could be helpful if the driver is parking often in the same parking garage hence the vehicle knows the location based on previous driving cycles.

As soon as the driver press the pop-up button, the vehicle may take over full control or partial control including steering, braking and acceleration of the vehicle.

The on-board sensors may detect the parking garage barrier with a parking ticket machine and or any objects or obstacles in front of the ego-vehicle.

If there are any vehicles in front of the ego-vehicle trying to park or maneuvering towards the parking garage barrier, the ego-vehicle may keep safe distance and follow the leading vehicle.

If there is no leading vehicle, the ego-vehicle may detect the position of the garage barrier and ticketing machine with its on-board sensors system and may modify the ego-vehicle's trajectory so that the ego-vehicle may be parallel to the ticket machine/parking infrastructure and may be comfortably near to the ticket machine so that a driver could easily press the button and obtain a parking ticket.

After the ego-vehicle is aligned in parallel and near to the ticket machine, the driver may stop the vehicle as soon as the ego-vehicle reaches the ticket machine.

The ego-vehicle may also stop automatically based on on-board sensors and actuators or may be stopped by driver by pressing the brake just near to the ticketing machine. The driver may obtain the ticket and the ego-vehicle may automatically steer past the parking garage barrier.

After the barrier is reached, the driver may directly override the system by manually steering and/or a pop-up button may be raised/displayed in an HMI/infotainment system of the ego-vehicle to indicate successful entry/exit from the parking garage.

Furthermore, a data processing unit is provided. The data processing unit is configured to carry out the above-described method at least partly.

The data processing unit can comprise or be an electronic control unit (ECU) for a vehicle. The electronic control unit can be an intelligent processor-controlled unit that can communicate with other modules, optionally via a central gateway (CGW). The control unit can form part of the vehicle's onboard network via fieldbuses such as the CAN bus, LIN bus, MOST bus and/or FlexRay or via automotive Ethernet, optionally together with a telematics control unit. The electronic control unit may be configured to control functions relevant to a driving behavior of the vehicle, such as an engine control system, a power transmission, a braking system and/or a tire pressure control system. In addition, some or all driver assistance systems such as parking assistant, adaptive cruise control, lane departure warning, lane change assistant, traffic sign recognition, light signal recognition, approach assistant, night vision assistant, intersection assistant, and/or many others may be controlled by the control unit.

Moreover, the description given above with respect to the method applies mutatis mutandis to the data processing unit and vice versa.

Furthermore, a vehicle is provided. The vehicle comprises the above-described data processing unit and optionally a sensor system connected to the data processing unit.

The vehicle may be an automobile, e.g., a car. The vehicle may be automated. The automated vehicle can be designed to take over lateral and/or longitudinal guidance at least partially and/or temporarily during automated driving of the automated vehicle. Therefore, inter alia the sensor data of the above-described sensor system may be used. The data processing unit may comprise or may be a control unit and thus may be configured to control the automated driving at least partly.

The automated driving may be such that the driving of the vehicle is (largely) autonomous. The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The vehicle autonomously performs functions such as triggering the turn signal, changing lanes, and/or lane keeping. The driver can attend to other matters, but is prompted by the system to take over control within a warning time if needed.

The vehicle may be an autonomy level 4 vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

Moreover, the description given above with respect to the method and the control unit applies mutatis mutandis to the vehicle and vice versa.

Furthermore, a computer program comprising instructions which, when the program is executed by a computer, optionally the control unit, cause the computer to carry out the above-described method at least partly.

The program may comprise any program code, in particular a code suitable for control systems of vehicles. The description given above with respect to the method, the control unit and the vehicle applies mutatis mutandis to the computer program and vice versa.

Furthermore, a computer-readable medium comprising instructions which, when executed by a computer, cause the computer to carry out the above-described method at least partly.

The computer-readable medium may be any digital data storage device, such as a USB flash drive, a hard disk, a CD-ROM, an SD card or an SSD card. The above-described computer program may be stored on the computer-readable medium. However, the computer program does not necessarily have to be stored on such a computer-readable medium, but can also be obtained via the Internet.

Moreover, the description given above with respect to the method, the control unit, the vehicle, and the computer program applies mutatis mutandis to the computer-readable (storage) medium and vice versa.

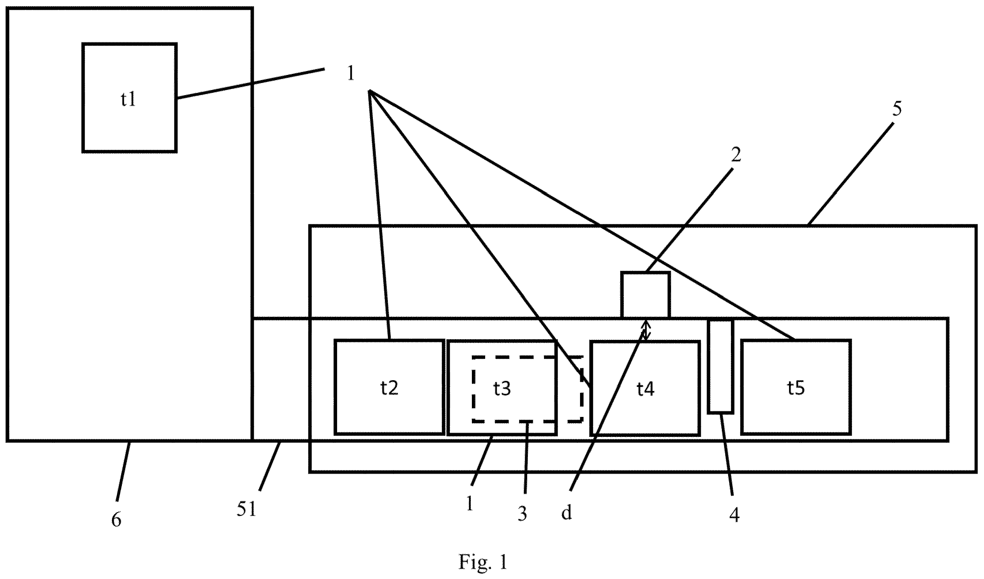

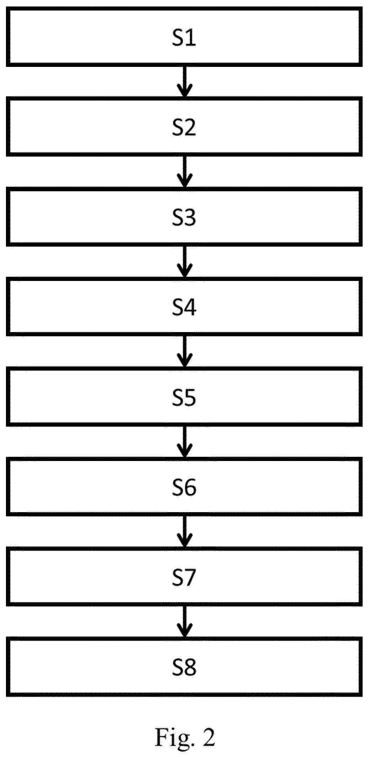

An example is described with reference to figures 1 and 2 below.
Fig. 1 shows schematically a vehicle with a data processing unit which is configured to carry out a method for automatically driving an automated vehicle into and out of a parking garage, and
Fig. 2 shows a flowchart of the method for automatically driving the automated vehicle into and out of the parking garage.

In the following an example is described with reference to figures 1 and 2, wherein the same reference signs are used for the same objects throughout the description of the figures.

In figure 1 an automated vehicle 1 comprising a control unit for carrying out a method for automatically driving the automated vehicle 1 into a parking garage 5 is shown.

More specifically, the automated vehicle 1 is shown in five consecutive states/positions t1 - t5 during carrying out the method, wherein a flowchart of the method is shown in figure 2.

The method comprises a first step S1 carried out in the first state t1 when the vehicle is driving on a road 6 next to the parking garage 5. In the first step S1 of the method, the control unit detects a location of the parking garage 5 and of an access road 51 thereof using map data of a navigation system of the vehicle 1.

In a second step S2 of the method, the control unit sends a control signal to a human machine interface of the vehicle 1 comprising a display unit. Based on the control signal, the display unit displays an information about the detected location of the parking garage 5 to a user/driver of the vehicle 1. The method is not limited to one parking garage and there may be detected and displayed several parking garages.

When the user of the vehicle 1 reacts on the displayed location of the parking garage 5 by inputting predefined user input into human machine interface of the vehicle 1, this user input is received in a third step S3 of the method at the human machine interface in response to displaying the information about the detected location of the parking garage 5. Here, the user selects the parking garage 5 via a touch screen of the human machine interface integrated into the display unit and thereby confirms that the vehicle 1 should drive to the parking garage 5.

In a fourth step S4 of the method, the vehicle 1 maneuvers/drives automated to the detected location of the selected parking garage 5, wherein the vehicle 1 controls the longitudinal and/or lateral movement of the vehicle 1 during maneuvering the vehicle 1 to the detected location of the parking garage 5.

When entering the parking garage access road 51 during a fifth step S5 of the method corresponding to the second state t2, the vehicle 1 starts detecting (i.e., tries to detect) a ticket machine 2 being installed next to the access road 51 of the parking garage 5 using sensor data captured by an on-board sensor system of the vehicle 1.

In the present case, the ticket machine 2 cannot be seen in the second state t2 by the on-board sensors of the vehicle 1 due to a further vehicle 3 being position in front of the vehicle 1, i.e., between the vehicle 1 and the ticket machine 2.

However, since the vehicle 1 already entered the access road 51 of the parking garage 5, the vehicle 1 maneuvers automated, i.e., controls the longitudinal and/or lateral movement of the vehicle 1 during maneuvering the vehicle 1 to the ticket machine 2, based on the sensor data captured by the on-board sensor system of the vehicle 1. This is done in a sixth step S6 of the method by following the further/leading vehicle 3 until the ticket machine 2 can be detected by the on-board sensors of the vehicle 1 in the third state t3. Following the leading vehicle 3 includes determining if the leading vehicle 3 is located in front of the vehicle 1 in the access road 51 of the parking garage 5 and following the detected leading vehicle 3 by controlling the longitudinal and/or lateral movement of the vehicle 1. When the ticket machine 2 is detected by the on-board sensors of the vehicle 1 in the sixth step S6, i.e., when the vehicle is in the fourth state t4, the vehicle 1 maneuvers to the detected ticket machine 2 based on sensor data information of the on-board sensors such that a distance d between a window of the vehicle 1 next to a driver seat of the vehicle 1 and the detected ticket machine 2 is below 80 cm, wherein the vehicle controls the longitudinal and/or lateral movement of the vehicle 1 during maneuvering the vehicle 1 to the detected ticket machine 2.

When reaching the ticket machine 2 in the fourth state t4 and in a seventh step S7 of the method, the vehicle 1 is either stopped manually by pushing the break of the vehicle 1 by the driver or is stopped automatically by the control unit of the vehicle 1 sending a control signal to the brake of the vehicle 1 causing the break to stop the vehicle 1.

In an eight step S8 of the method, after reaching the ticket machine 2, i.e., in the fourth state t4, the vehicle 1 maneuvers the vehicle 1 behind a barrier 4 installed in front of a parking zone of the parking garage 5 when the barrier 4 opens because the driver opened it via the ticket machine 2.

After passing the barrier and thus in the fifth state t5, the method ends, and the driver may override the system by manually steering and/or a pop-up button may be raised/displayed in an HMI/infotainment system of the vehicle 1 to indicate successful entry into the parking garage 5.

The above method was described with respect to entering the parking garage 5. However, the method may be used in the same way for leaving the parking garage 5, wherein the parking ticket may be paid automatically when leaving the parking garage 5.

### Reference signs

- 1: vehicle
- 2: ticket machine
- 3: further/leading vehcile
- 4: barrier
- 5: parking garage
- 51: access road
- 6: road
- d: distance
- S1 - S8: steps of the method
- t1 - t5: states/positions of the vehicle during the method

## Claims

1. Method for automatically driving an automated vehicle (1) into and/or out of a parking garage (5), the method comprising:
detecting a ticket machine (2) being installed at an access road (51) and/or an exit road of a parking garage (5) using sensor data captured by an on-board sensor system of the vehicle (1), and
maneuvering the vehicle (1) to the detected ticket machine (2) such that a distance (d) between a window of the vehicle (1) next to a driver seat of the vehicle (1) and the detected ticket machine (2) is below 80 cm,
wherein the vehicle (1) controls a longitudinal and/or lateral movement of the vehicle (1) during maneuvering the vehicle (1) to the detected ticket machine (2), and
wherein the vehicle (1) controls the longitudinal and/or lateral movement of the vehicle (1) during maneuvering the vehicle (1) to the detected ticket machine (2) based on the sensor data captured by the on-board sensor system of the vehicle (1),
**characterized in that** the maneuvering the vehicle (1) to the detected ticket machine (2) includes:
determining if a further vehicle (3) is located in front of the vehicle (1) in the access road (51) and/or exit road of the parking garage (5), and
following the further vehicle (3) by controlling the longitudinal and/or lateral movement of the vehicle (1).

2. Method according to claim 1, **characterized in that** the method comprises detecting a location of the parking garage (5) using map data.

3. Method according to claim 2, **characterized in that** the method comprises:
displaying an information about the detected location of the parking garage (5) to a user of the vehicle (1),
receiving an user input in response to displaying the information about the detected location of the parking garage (5), and
maneuvering the vehicle (1) to the detected location of the parking garage (5) depending on the received user input,
wherein the vehicle (1) controls the longitudinal and/or lateral movement of the vehicle (1) during maneuvering the vehicle (1) to the detected location of the parking garage (5).

4. Method according to any of claims 1 to 3, **characterized in that** the method further comprises maneuvering the vehicle (1) behind a barrier (4) of the parking garage (5) after reaching the ticket machine (2).

5. A data processing unit, **characterized in that** the data processing unit is configured to carry out the method according to any of claims 1 to 4.

6. A vehicle (1), **characterized in that** the vehicle comprises the data processing unit according to claim 7.

7. A computer program comprising instructions which, when the program is executed by a computer, cause the computer to carry out the method according to any of claims 1 to 4.

8. A computer-readable medium comprising instructions which, when executed by a computer, cause the computer to carry out the method according to any of claims 1 to 4.

## Patentansprüche

1. Verfahren zum automatischen Einfahren eines automatisierten Fahrzeugs (1) in und/oder Ausfahren aus einem Parkhaus (5), wobei das Verfahren umfasst:
Erfassen eines Ticketautomaten (2), der an einer Zufahrtsstraße (51) und/oder einer Ausfahrtsstraße eines Parkhauses (5) installiert ist, unter Verwendung von Sensordaten, die von einem bordeigenen Sensorsystem des Fahrzeugs (1) erfasst werden, und
Manövrieren des Fahrzeugs (1) zu dem erfassten Ticketautomaten (2), derart, dass ein Abstand (d) zwischen einem Fenster des Fahrzeugs (1) neben einem Fahrersitz des Fahrzeugs (1) und dem erfassten Ticketautomaten (2) unter 80 cm liegt,
wobei das Fahrzeug (1) eine Längs- und/oder Querbewegung des Fahrzeugs (1) während des Manövrierens des Fahrzeugs (1) zu dem erfassten Ticketautomaten (2) steuert, und
wobei das Fahrzeug (1) die Längs- und/oder Querbewegung des Fahrzeugs (1) während des Manövrierens des Fahrzeugs (1) zu dem erfassten Ticketautomaten (2) basierend auf den Sensordaten, die von dem bordeigenen Sensorsystem des Fahrzeugs (1) erfasst werden, steuert,
**dadurch gekennzeichnet, dass** das Manövrieren des Fahrzeugs (1) zu dem erfassten Ticketautomaten (2) umfasst:
Bestimmen, ob sich ein weiteres Fahrzeug (3) vor dem Fahrzeug (1) in der Zufahrtsstraße (51) und/oder Ausfahrtsstraße des Parkhauses (5) befindet, und
Folgen des weiteren Fahrzeugs (3) durch Steuern der Längs- und/oder Querbewegung des Fahrzeugs (1).

2. Verfahren nach Anspruch 1, **dadurch gekennzeichnet, dass** das Verfahren das Erfassen einer Lage des Parkhauses (5) unter Verwendung von Kartendaten umfasst.

3. Verfahren nach Anspruch 2, **dadurch gekennzeichnet, dass** das Verfahren umfasst:
Anzeigen einer Information über die erfasste Lage des Parkhauses (5) an einen Benutzer des Fahrzeugs (1),
Empfangen einer Benutzereingabe als Reaktion auf das Anzeigen der Information über die erfasste Lage des Parkhauses (5), und
Manövrieren des Fahrzeugs (1) zu der erfassten Lage des Parkhauses (5) in Abhängigkeit von der empfangenen Benutzereingabe,
wobei das Fahrzeug (1) die Längs- und/oder Querbewegung des Fahrzeugs (1) während des Manövrierens des Fahrzeugs (1) zu der erfassten Lage des Parkhauses (5) steuert.

4. Verfahren nach einem der Ansprüche 1 bis 3, **dadurch gekennzeichnet, dass** das Verfahren ferner das Manövrieren des Fahrzeugs (1) hinter eine Schranke (4) des Parkhauses (5) nach Erreichen des Ticketautomaten (2) umfasst.

5. Datenverarbeitungseinheit, **dadurch gekennzeichnet, dass** die Datenverarbeitungseinheit konfiguriert ist, das Verfahren nach einem der Ansprüche 1 bis 4 durchzuführen.

6. Fahrzeug (1), **dadurch gekennzeichnet, dass** das Fahrzeug die Datenverarbeitungseinheit nach Anspruch 5 umfasst.

7. Computerprogramm, umfassend Instruktionen, welche, wenn das Programm von einem Computer ausgeführt wird, den Computer veranlassen, das Verfahren nach einem der Ansprüche 1 bis 4 durchzuführen.

8. Computerlesbares Medium, umfassend Instruktionen, welche, wenn sie von einem Computer ausgeführt werden, den Computer veranlassen, das Verfahren nach einem der Ansprüche 1 bis 4 durchzuführen.

## Revendications

1. Procédé pour conduire automatiquement un véhicule automatisé (1) dans et/ou hors d'un garage de stationnement (5), le procédé comprenant :
la détection d'un distributeur de tickets (2) étant installé à une route d'accès (51) et/ou une route de sortie d'un garage de stationnement (5) en utilisant des données de capteur capturées par un système de capteur embarqué du véhicule (1), et
la manœuvre du véhicule (1) vers le distributeur de tickets (2) détecté de telle sorte qu'une distance (d) entre une fenêtre du véhicule (1) à côté d'un siège de conducteur du véhicule (1) et le distributeur de tickets (2) détecté soit inférieure à 80 cm,
dans lequel le véhicule (1) commande un mouvement longitudinal et/ou latéral du véhicule (1) pendant la manœuvre du véhicule (1) vers le distributeur de tickets (2) détecté, et
dans lequel le véhicule (1) commande le mouvement longitudinal et/ou latéral du véhicule (1) pendant la manœuvre du véhicule (1) vers le distributeur de tickets (2) détecté sur la base des données de capteur capturées par le système de capteur embarqué du véhicule (1),
**caractérisé en ce que** la manœuvre du véhicule (1) vers le distributeur de tickets (2) détecté comprend:
la détermination si un autre véhicule (3) est situé devant le véhicule (1) dans la route d'accès (51) et/ou la route de sortie du garage de stationnement (5), et
le fait de suivre l'autre véhicule (3) en commandant le mouvement longitudinal et/ou latéral du véhicule (1).

2. Procédé selon la revendication 1, **caractérisé en ce que** le procédé comprend la détection d'un emplacement du garage de stationnement (5) en utilisant des données de carte.

3. Procédé selon la revendication 2, **caractérisé en ce que** le procédé comprend:
l'affichage d'une information sur l'emplacement détecté du garage de stationnement (5) à un utilisateur du véhicule (1),
la réception d'une entrée d'utilisateur en réponse à l'affichage de l'information sur l'emplacement détecté du garage de stationnement (5), et
la manœuvre du véhicule (1) vers l'emplacement détecté du garage de stationnement (5) en fonction de l'entrée d'utilisateur reçue,
dans lequel le véhicule (1) commande le mouvement longitudinal et/ou latéral du véhicule (1) pendant la manœuvre du véhicule (1) vers l'emplacement détecté du garage de stationnement (5).

4. Procédé selon l'une quelconque des revendications 1 à 3, **caractérisé en ce que** le procédé comprend en outre la manœuvre du véhicule (1) derrière une barrière (4) du garage de stationnement (5) après avoir atteint le distributeur de tickets (2).

5. Unité de traitement de données, **caractérisée en ce que** l'unité de traitement de données est configurée pour exécuter le procédé selon l'une quelconque des revendications 1 à 4.

6. Véhicule (1), **caractérisé en ce que** le véhicule comprend l'unité de traitement de données selon la revendication 5.

7. Programme d'ordinateur comprenant des instructions qui, lorsque le programme est exécuté par un ordinateur, amènent l'ordinateur à exécuter le procédé selon l'une quelconque des revendications 1 à 4.

8. Support lisible par ordinateur comprenant des instructions qui, lorsqu'elles sont exécutées par un ordinateur, amènent l'ordinateur à exécuter le procédé selon l'une quelconque des revendications 1 à 4.
